# EUROPÄISCHE PATENTSCHRIFT

(11) **EP 0 356 750 B1**
(45) Veröffentlichungstag und Bekanntmachung des Hinweises auf die Patenterteilung: **02.02.1994**
(21) Anmeldenummer: 89114407.3
(22) Anmeldetag: 04.08.1989
(51) Int. Cl.: F16C 11/06, F16C 11/12

(54) **Kugelgelenk, insbesondere für Verstelleinrichtungen bei Scheinwerfern von Kraftfahrzeugen**
Ball- and -socket joint, especially for adjusting devices for motor vehicle head-lights
Joint à rotule, en particulier pour dispositifs ajustables pour phares d'automobiles

(30) Priorität: 01.09.1988 DE 8811059 U
(43) Veröffentlichungstag der Anmeldung: 07.03.1990
(73) Patentinhaber: ROBERT BOSCH GMBH, 70442 Stuttgart (DE)
(72) Erfinder: Schauwecker, Friedrich, D-7417 Pfullingen (DE)

(56) Entgegenhaltungen:
- DE-B- 2 631 926
- FR-A- 1 053 159
- FR-A- 2 101 999
- FR-A- 2 574 032
- US-A- 4 004 771
- US-A- 4 118 131

## Beschreibung

Die Erfindung betrifft ein Kugelgelenk nach der Gattung des Anspruchs 1.

Ein solches Kugelgelenk ist durch die DE-B-26 31 926 bekannt. Dieses Kugelgelenk ist Teil einer Verstelleinrichtung bei einem Scheinwerfer für Kraftfahrzeuge. Das Kugelgelenk weist einen Kugelzapfen mit einem Schaft auf, an dessen Ende eine Kugel angeformt ist. Weiterhin weist das Kugelgelenk eine Kugelzapfenlagerung auf, die wiederum federnde Arme aufweist, deren zur Kugel weisende Oberfläche der Kugeloberfläche angepaßt ist und die die Kugel mit dieser Oberfläche zum Teil umschließen. Nachteilig bei diesem Kugelgelenk ist, daß bei einer auf den Kugelzapfen von der Kugelzapfenlagerung weg wirkenden axialen Belastung die Arme durch die Kugel federnd ausgelenkt werden können, so daß der Kugelzapfen aus der Kugelzapfenlagerung herausgezogen werden kann und somit die Funktionssicherheit des Kugelgelenks nicht sichergestellt ist.

Durch die FR-U-21 01 999 ist außerdem ein Kugelgelenk bekannt, das einen Kugelzapfen mit einem Schaft und einer an dessen Ende angeformten Kugel aufweist. Eine Kugelzapfenlagerung weist federnde Arme auf, deren zur Kugel weisende Oberfläche der Kugeloberfläche angepaßt ist und die die Kugel mit dieser Oberfläche zum Teil umschließen. Die Kugelzapfenlagerung weist außerdem ein formstabiles, erste axiale und radiale Kraftkomponenten aufnehmendes Stützlager auf. Die Arme greifen auf der dem Stützlager gegenüberliegenden Hälfte der Kugeloberfläche an und nehmen zweite axiale und radiale Kraftkomponenten auf. Die Arme sind radial bezüglich des Schafts des Kugelzapfens federnd auslenkbar. Auch bei diesem Kugelgelenk ist es nachteilig, daß bei einer auf den Kugelzapfen axial vom Stützlager weg wirkenden Belastung die Arme durch die Kugel federnd ausgelenkt werden können und der Kugelzapfen aus der Kugelzapfenlagerung herausgezogen werden kann.

Der Erfindung liegt die Aufgabe zugrunde das gattungsgemäße Kugelgelenk so weiterzubilden, daß ein Herausziehen des Kugelzapfens aus der Kugelzapfenlagerung bei auf diesen wirkender axialer Belastung verhindert wird.

Diese Aufgabe wird durch die Merkmale des Anspruchs 1 gelöst. Bei einer auf den Kugelzapfen wirkenden, diesen von der Kugelzapfenlagerung wegziehenden axialen Belastung kommt die Rastkante der Arme an der Ringschulter des Kugelzapfens zur Anlage und verhindert eine weitere axiale Bewegung des Kugelzapfens und damit ein Ausschwenken der Arme. Dabei ist durch den Abstand der Rastkante von der Ringschulter dennoch eine Schwenkbewegung des Kugelzapfens möglich.

Durch die Weiterbildung des Kugelgelenks nach Anspruch 3 wird erreicht, daß nur eine geringe Montagekraft erforderlich ist, bei gleichzeitig hoher Ausknüpfkraft des Kugelzapfens.

### Zeichnung

Zwei Ausführungsbeispiele der Erfindung sind in der Zeichnung anhand mehrerer Figuren dargestellt und in der nachfolgenden Beschreibung näher erläutert.

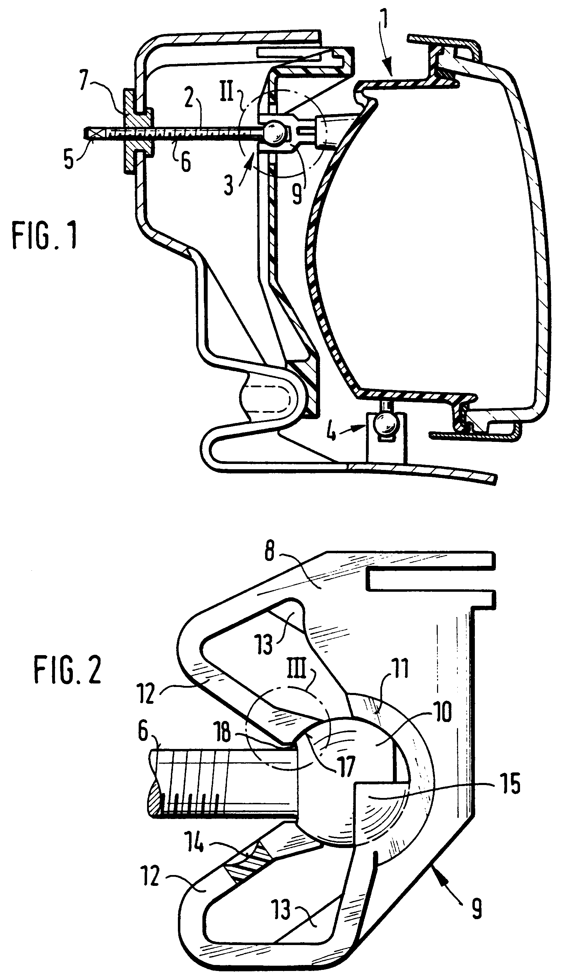

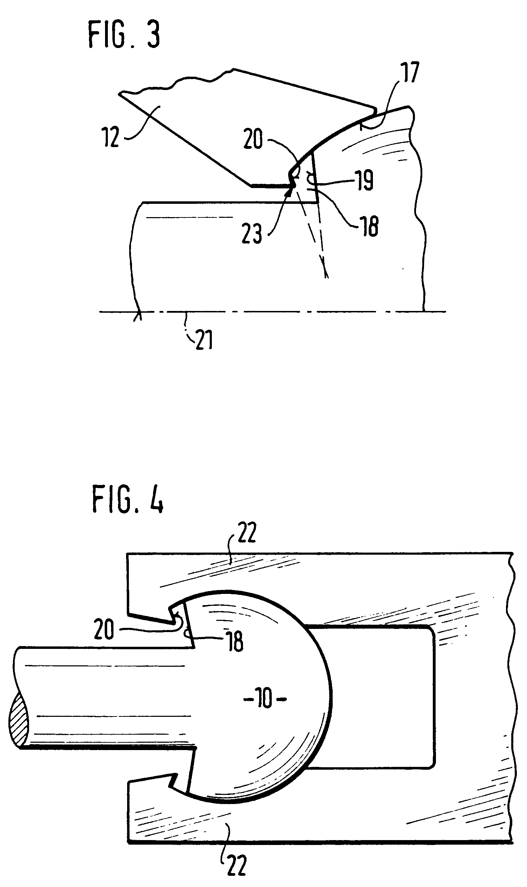

Es zeigen Figur 1 einen Scheinwerfer für Kraftfahrzeuge, Figur 2 ein erstes Ausführungsbeispiel des erfindungsgemäß ausgebildeten Kugelgelenks, Figur 3 eine vergrößerte Teilansicht des Kugelgelenks nach Figur 2 und Figur 4 ein zweites Ausführungsbeispiel eines Kugelgelenks.

### Beschreibung der Ausführungsbeispiele

In Figur 1 ist ein Scheinwerfer für Kraftfahrzeuge dargestellt. Dieser besteht aus einem Reflektor 1, der in wenigstens einem ortsfesten Kugelgelenk 4 drehbar und wenigstens einem weiteren verstellbaren Kugelgelenk 3 gelagert ist.

Das verstellbare Kugelgelenk 3 setzt sich zusammen aus einem Kugelzapfen 2 und einer Kugelzapfenlagerung 9.

Der Kugelzapfen 2 besteht aus einem Gewindeschaft 6, der durch eine an der Karrosserie des Kraftfahrzeuges angebrachte Gewindebuchse 7 geschraubt und an seinem Ende 5 mit einer nicht dargestellten Stellvorrichtung verbunden ist. An das andere Ende des Schafts 6 ist eine Kugel 10 angeformt, die in der Kugelzapfenlagerung 9 gelagert ist.

Die Kugelzapfenlagerung 9 wird, wie in Figur 2 dargestellt, von einem Formteil 8 aus elastischem Kunststoff gebildet, das so gestaltet ist, daß es mit einfachen Mitteln am Reflektor 1 befestigt werden kann. Die Kugelzapfenlagerung 9 setzt sich zusammen aus einem formstabilen Stützlager 11 und zwei einander diametral gegenüberliegenden federnden Armen 12. Das Stützlager 11 weist zwei einander diametral gegenüberliegende Lagerschalen 15 auf, die etwa die Form von Viertelstücken einer Halbkugeloberfläche haben. Die federnden Arme 12 stehen vom Formteil 8 ab, wobei nur der Endbereich der Arme 12 elastisch verformbar ist, da die Verbindung zum Formteil 8 durch die Versteifungsrippen 13 verstärkt ist. Die federnden Arme 12 bilden zur Radialebene des Stützlagers 11 einen Winkel von 55°, sind quer zur Radialebene auslenkbar und weisen mit ihren Enden zum Stützlager 11 hin. Die der Kugel 10 zugewandte Oberfläche 17 der federnden Arme 12 ist der Kugeloberfläche angepaßt. Die federnden Arme 12 umschließen mit ihrer der Kugel 10 zugewandten Oberfläche 17 die Kugel 10 auf der dem Stützlager 11 gegenüberliegenden Hälfte der Kugel zum Teil und halten die Kugel spielfrei im Stützlager. Die Kugel 10 liegt im Stützlager 11 an den Lagerschalen 15 an und kann daher bei einer Belastung nicht in der Radialebene des Stützlagers ausweichen.

In der durch die beiden federnden Arme 12 gebildeten Ebene ist die Winkelbeweglichkeit des Kugelzapfens 2 durch die Arme selbst beschränkt, in einer Ebene senkrecht zu dieser ist jedoch eine große Winkelbeweglichkeit des Kugelzapfens 2 vorhanden.

Zum Einführen des Kugelzapfens 2 in die Kugelzapfenlagerung 9 wird die Kugel 10 auf den federnden Armen 12 angelegt, die zur Führung und Zentrierung der Kugel 10 eine Vertiefung 14 längs der Einschubrichtung der Kugel aufweisen. Durch Drücken des Kugelzapfens 2 in Richtung des Stützlagers 11 werden die federnden Arme 12 ausgelenkt, und die Kugel kann zwischen diesen hindurch in das Stützlager gleiten. Wenn die Kugel 10 mit ihrem Hauptdurchmesser zwischen den federnden Armen 12 hindurch ist, legen sich diese an der dem Stützlager gegenüberliegenden Hälfte der Kugel 10 an und halten sie im Stützlager 11.

Ein Ausknüpfen des Kugelzapfens 2 aus der Kugelzapfenlagerung 9 wird durch die von den federnden Armen 12 in Richtung auf das Stützlager 11 mit ihrer Oberfläche 17 auf die Kugel 10 ausgeübten Kräfte erschwert.

In einer weiteren Ausgestaltung des Kugelgelenks 3, in Figur 3 dargestellt, weist der Kugelzapfen 2 am Übergang zwischen Schaft 6 und Kugel 10 eine ringförmige Einkerbung 18 auf, unter Bildung einer von der Kugel weg zur Achse 21 des Schafts geneigten Ringschulter 19, wobei der Winkel zwischen der Ringschulter 19 und der Achse 21 kleiner als 90° ist. Die federnden Arme 12 weisen eine aus der Oberfläche 17 hervorstehende, in die Einkerbung ragende Rastkante 23 auf mit einer zur Seite des Stützlagers 11 weisenden Ringschulter 20. Diese Rastkante 23 ist in einem Abstand von der Ringschulter 19 angeordnet, so daß der Kugelzapfen 2 eine Schwenkbewegung um einen bestimmten Winkelbetrag ausführen kann, bis die Ringschulter 19 an der Ringschulter 20 zur Anlage kommt. Der Winkel, den die Ringschulter 20 mit der Achse 21 in Richtung der Kugel 10 gesehen bildet, ist so gewählt, daß die Ringschulter 20 bei entsprechender Schwenklage der Kugel plan an der Ringschulter 19 anliegt. Dadurch wird ein Abgleiten der federnden Arme 12 auf der Kugeloberfläche unter sehr starker axialer Belastung verhindert, da sich die Ringschultern ineinander verhaken.

In einem weiteren Ausführungsbeispiel, in Figur 4 dargestellt, wird die Kugelzapfenlagerung 9 nur von den federnden Armen 22 gebildet. Das Stützlager 11 von Figur 2 beziehungsweise Figur 3 entfällt. Um ein Herausgleiten der Kugel 10 aus den federnden Armen 22 unter axialer Belastung zu verhindern, ist der Kugelzapfen 2 am Übergang zwischen Schaft 6 und Kugel 10 mit einer ringförmigen Einkerbung 18 versehen, in die eine aus der der Kugel 10 zugewandten Oberfläche der federnden Arme 22 hervorstehende Rastkante 23 eingreift, die analog dem vorstehenden Ausführungsbeispiel ausgebildet ist.

In technisch äquivalenter Weise kann der Schaft des Kugelzapfens 2 auch durch eine axiale Öffnung im Stützlager 11 geführt sein.

Auch bei dieser Ausführungsform wird die Einkerbung 18 auf der dem Stützlager 11 abgewandten Hälfte der Kugel 10 im Bereich der dort angreifenden federnden Arme 12 angeordnet, so daß deren Rastkante 23 ein Drehwinkelspiel bei der Kugeldrehstellung zulassend in die Einkerbung 18 ragen und den Kugelzapfen 2 gegen Herausdrücken sichern.

## Patentansprüche

1. Kugelgelenk (3), insbesondere für Verstelleinrichtungen bei Scheinwerfern von Kraftfahrzeugen, mit einem Kugelzapfen (2) bestehend aus einem Schaft (6), an dessen Ende eine Kugel (10) angeformt ist und einer Kugelzapfenlagerung (9), die federnde Arme (12;22) aufweist, deren zur Kugel (10) weisende Oberfläche (17) der Kugeloberfläche angepaßt ist und die die Kugel (10) mit dieser Oberfläche (17) zum Teil umschließen, dadurch gekennzeichnet, daß sich am Übergang zwischen dem Schaft (6) und der Kugel (10) eine ringförmige Einkerbung (18) befindet, die eine Ringschulter (19) bildet und in die eine aus der der Kugeloberfläche angepaßten Oberfläche (17) der federnden Arme (12;22) hervorstehende Rastkante (23) in einem Abstand von der Ringschulter (19) derart eingreift, daß der Kugelzapfen (2) eine Schwenkbewegung um einen bestimmten Winkelbetrag ausführen kann.

2. Kugelgelenk nach Anspruch 1, dadurch gekennzeichnet, daß die Kugelzapfenlagerung (9) zusätzlich zu den federnden Armen (12) ein formstabiles, erste axiale und radiale Kraftkomponenten aufnehmendes Stützlager (11) aufweist und die Oberfläche (17) der federnden Arme (12) auf der dem Stützlager (11) gegenüberliegenden Hälfte der Kugeloberfläche, zweite axiale und radiale Kraftkomponenten aufnehmend, zur Anlage kommt und daß die federnden Arme (12) radial bezüglich des Schafts (6) des Kugelzapfens (2) federnd auslenkbar sind.

3. Kugelgelenk nach Anspruch 2, dadurch gekennzeichnet, daß die federnden Arme (12) in einem spitzen Winkel zur Radialebene des Stützlagers verlaufend an einem das Stützlager (11) aufnehmenden Körper angeordnet sind.

4. Kugelgelenk nach Anspruch 3, dadurch gekennzeichnet, daß der spitze Winkel zwischen den federnden Armen (12) und der Radialebene des Stützlagers (11) 55 Grad beträgt.

5. Kugelgelenk nach einem der Ansprüche 2 bis 4, dadurch gekennzeichnet, daß das Stützlager (11) mindestens zwei einander gegenüberliegende, aus Teilkugeloberflächen gebildete Lagerschalen (15) aufweist.

6. Kugelgelenk nach einem der Ansprüche 2 bis 5, dadurch gekennzeichnet, daß als federnde Arme (12) mindestens zwei einander gegenüberliegende Arme vorgesehen sind.

## Claims

1. Ball joint (3), especially for adjustment mechanisms in headlamps of motor vehicles, having a ball pin (2) comprising a shank (6), onto the end of which there is formed a ball (10), and a ball pin mounting (9) exhibiting resilient arms (12; 22), whose surface (17) pointing to the ball (10) is matched to the ball surface and which partially enclose the ball (10) with this surface (17), characterized in that at the transition between the shank (6) and the ball (10) there is an annular notch (18) which forms a ring shoulder (19) and in which a latching edge (23), projecting out of that surface (17) of the resilient arms (12; 22) matched to the ball surface, engages at a distance from the ring shoulder (19) in such a way that the ball pin (2) is able to execute a swivel movement by a certain angular measure.

2. Ball joint according to Claim 1, characterized in that the ball pin mounting (9) exhibits, in addition to the resilient arms (12), a dimensionally stable step bearing (11) absorbing first axial and radial force components and the surface (17) of the resilient arms (12) comes to bear, absorbing second axial and radial force components, upon that half of the ball surface lying opposite the step bearing (11) and in that the resilient arms (12) can be resiliently deflected in the radial direction in relation to the shank (6) of the ball pin (2).

3. Ball joint according to Claim 2, characterized in that the resilient arms (12), running at an acute angle to the radial plane of the step bearing, are disposed on an element receiving the step bearing (11).

4. Ball joint according to Claim 3, characterized in that the acute angle between the resilient arms (12) and the radial plane of the step bearing (11) measures 55 degrees.

5. Ball joint according to one of Claims 2 to 4, characterized in that the step bearing (11) exhibits at least two mutually opposing bearing shells (15) formed out of part-ball surfaces.

6. Ball joint according to one of Claims 2 to 5, characterized in that, as resilient arms (12), at least two mutually opposing arms are provided.

## Revendications

1. Joint à rotule (3) en particulier pour des dispositifs de réglage de phares de véhicules à moteur, avec un pivot à rotule (2) composé d'une tige (6), à l'extrémité de laquelle est formée une sphère (10) et d'un logement (9) du pivot à rotule, qui comprend des bras flexibles (12 ; 22), dont la surface (17) regardant la sphère est adaptée à la surface de la sphère et qui entourent partiellement la sphère (10) avec cette surface (17), caractérisé en ce que à la transition entre la tige (6) et la sphère (10) se trouve une encoche (18) annulaire, qui forme un épaulement annulaire (19) et dans laquelle s'engage une arète d'arrêt (23) en saillie sur la surface (17) des bras flexibles (12 ; 22) adaptée à la surface de la sphère à une certaine distance de l'épaulement annulaire (19) de façon que le pivot à rotule (2) puisse exécuter un mouvement de pivotement d'une valeur angulaire déterminée.

2. Joint à rotule selon la revendication 1, caractérisé
- en ce que le logement du pivot à rotule (9) comporte en plus des bras flexibles (12) un siège d'appui (11) de forme stable, absorbant les premières composantes de force axiales et radiales et la surface (17) des bras flexibles (12) prend appui sur la moitié de la surface de la sphère faisant face au siège d'appui (11), en absorbant les secondes composantes de force axiales et radiales, et
- en ce que les bras flexibles (12) peuvent être déviés, radialement de manière flexible par rapport à la tige (6) du pivot à rotule (2).

3. Joint à rotule selon la revendication 2, caractérisé en ce que les bras flexibles (12) sont placés sur un bâti recevant le siège d'appui (11) en se développant sous un angle aigu par rapport au plan radial du siège d'appui.

4. Joint à rotule selon la revendication 3, caractérisé en ce que l'angle aigu entre les bras flexibles (12) et le plan radial du siège d'appui (11) est de 55 degrés.

5. Joint à rotule selon une des revendication 2 à 4, caractérisé en ce que le siège d'appui (11) comporte au moins deux coquilles de coussinet (15) situées en face l'une de l'autre, formées de surfaces sphériques partielles.

6. Joint à rotule selon une des revendications 2 à 5, caractérisé en ce que comme bras flexibles (12) sont prévus au moins deux bras situés en face l'un de l'autre.
